# EUROPÄISCHE PATENTSCHRIFT

(11) **EP 2 076 705 B1**
(45) Veröffentlichungstag und Bekanntmachung des Hinweises auf die Patenterteilung: **02.02.2011**
(21) Anmeldenummer: 07802164.9
(22) Anmeldetag: 06.09.2007
(51) Int. Cl.: F16L 37/084, F16L 37/14

(54) **KUPPLUNGSTEIL FÜR EINE FLUIDLEITUNGSKUPPLUNG**
COUPLING PART FOR A FLUID LINE COUPLING
PIÈCE D'ACCOUPLEMENT POUR RACCORD DE CONDUIT DE FLUIDE

(30) Priorität: 04.10.2006 DE 102006047267
(43) Veröffentlichungstag der Anmeldung: 08.07.2009
(73) Patentinhaber: A. Raymond et Cie., 38000 Grenoble (FR)
(72) Erfinder: BOKÜHN, Sven, 79664 Wehr (DE); FEGER, Axel, 79540 Lörrach (DE); GRÜNMÜLLER, Bernd, 78048 Villingen (DE); UTZ, Daniel, 79415 Bad Bellingen (DE); BORDERIE, Patrick, 38690 Le Grand Lemps (FR); BOYER, Jacques, F-38410 St Martin d'Uriage (FR)
(74) Vertreter: Rüttgers, Joachim
(86) Internationale Anmeldenummer: PCT/EP2007/007759
(87) Internationale Veröffentlichungsnummer: WO 2008/040429

(56) Entgegenhaltungen:
- WO-A-98/28567
- WO-A-2005/116509
- DE-A1-102006 019 257
- DE-B3-102004 062 887

## Beschreibung

Die Erfindung betrifft ein Kupplungsteil für eine Fluidleitungskupplung gemäß dem Oberbegriff des Patentanspruches 1.

Ein derartiges Kupplungsteil ist aus DE 43 00 037 C1 bekannt. Das vorbekannte Kupplungsteil verfügt über ein in einem Aufnahmeabschnitt gehaltenes Verriegelungselement zum Sichern eines in einen Aufnahmeraum des Aufnahmeabschnittes einzuführenden, mit einer Ringschulter ausgebildeten Einsteckteiles. Das Verriegelungselement ist als ringförmig geschlossenes Federelement ausgebildet, bei dem an zwei an die Außenseite des Aufnahmeabschnittes austretenden Druckplatten einander gegenüberliegend zwei Ringabschnitte angeformt sind, an denen jeweils eine Verriegelungsnase zum Hintergreifen der Ringschulter des Einsteckteiles ausgebildet sind. Bei einem nicht ordnungsgemäß tiefen Einführen des Einsteckteiles in den Aufnahmeraum besteht jedoch die Gefahr, dass das Einsteckteil in dem Kupplungsteil nicht dadurch ordnungsgemäß gesichert ist, dass die Verriegelungsabschnitte die Ringschulter hintergreifen.

Aus DE 10 2004 062 887 B3 ist ein Kupplungsteil für eine Fluidleitungskupplung bekannt, bei dem an einem Verriegelungselement zum Einen zwei zum Hintergreifen einer an einem in das Kupplungsteil einzuführenden Einsteckteil ausgebildeten Ringschulter eingerichtete Rückhaltearme und zum Anderen zwei Verriegelungsarme ausgebildet sind. Die Verriegelungsarme sind in axialer Richtung des Kupplungsteiles biegsam und weisen an ihren freien Ende eine Eingriffsanordnung auf, die mit einem an dem Kupplungsteil ausgebildeten Verriegelungsvorsprung derart zusammenwirken, dass bei einem ordnungsgemäß tiefen Einführen des Einsteckteiles durch Anschlag der Ringschulter an die Verriegelungsarme und Biegen der Verriegelungsarme in Einführrichtung der Eingriff zwischen der Eingriffsstruktur sowie dem Verriegelungsvorsprung gelöst und das Verriegelungselement von einer Offenstellung in eine durch erneuten Eingriff der Verriegelungsstruktur sowie des Verriegelungsvorsprungs das Einsteckteil sichernde Schließstellung überführbar ist. Zum Lösen der Verbindung zwischen dem Einsteckteil und dem Verriegelungsteil müssen jedoch die Verriegelungsarme zum Lösen des Eingriffs zwischen der Eingriffsstruktur und dem Verriegelungsvorsprung in der Schließstellung wieder in Einführrichtung gebogen werden, was jedoch insbesondere bei sehr verengten Verhältnissen sehr problematisch ist oder überhaupt nicht durchgeführt werden kann.

Der Erfindung liegt die Aufgabe zugrunde, ein Kupplungsteil der eingangs genannten Art anzugeben, bei dem bei einer zuverlässigen Kontrolle einer ordnungsgemäßen Verriegelung eines Einsteckteiles in dem Kupplungsteil die Verbindung zwischen dem Einsteckteil und dem Kupplungsteil in verhältnismäßig einfacher Art und Weise wieder lösbar ist.

Diese Erfindung wird bei einem Kupplungsteil der eingangs genannten Art erfindungsgemäß mit den kennzeichnenden Merkmalen des Patentanspruches 1 gelöst.

Durch das Trennen der Funktion "Einsteckteilverriegelung" und der Funktion "Verriegetungskontrolle" ist es nunmehr möglich, das Kontrollelement nach dem Sicherstellen einer einmaligen ordnungsgemäßen Verriegelung des Einsteckteiles in der zweiten Kontrollstellung zu belassen und unabhängig von einer Betätigung des Kontrollelementes über ein Betätigen des Verriegelungselementes das Einsteckteil wieder freizugeben.

Weitere zweckmäßige Ausgestaltungen der Erfindung sind Gegenstand der Unteransprüche.

Die Erfindung ist nachfolgend anhand eines Ausführungsbeispieles mit Bezug auf die Figuren der Zeichnung erläutert. Es zeigen:
- Fig. 1: in einer perspektivischen Ansicht ein Ausführungsbeispiel eines erfindungsgemäßen Kupplungsteiles mit einem Kon- trollelement, das in einer in einem Aufnahmeabschnitt an- geordneten Kontrollelementaufnahme verschiebbar ist und sich in einer ersten Kontrollstellung befindet,
- Fig. 2: in einer perspektivischen, teilgeschnittenen Ansicht das beispielhafte Kupplungsteil gemäß Fig. 1 mit einem in das Kupplungsteil einzuführenden Einsteckteil,
- Fig. 3: das beispielhafte Kupplungsteil gemäß Fig. 1 und Fig. 2 mit einem eingeführten Einsteckteil und mit dem Kontrollele- ment in der ersten Kontrollstellung,
- Fig. 4: die Anordnung gemäß Fig. 3 mit dem Kontrollelement in einer zweiten Kontrollstellung,
- Fig. 5: in einer perspektivischen Ansicht ein weiteres Ausfüh- rungsbeispiel eines erfindungsgemäßen Kupplungsteiles mit einem Kontrollelement, das in einer in einem Verriege- lungselement angeordneten Kontrollelementaufnahme ver- schiebbar ist und sich in einer ersten Kontrollstellung befin- det,
- Fig. 6: in einer perspektivischen Ansicht das Kontrollelement und das Verriegelungselement gemäß Fig. 5 in der ersten Kon- trollstellung und
- Fig. 7: in einer perspektivischen Ansicht das Kontrollelement und das Verriegelungselement gemäß Fig. 5 und Fig. 6 in einer zweiten Kontrollstellung.

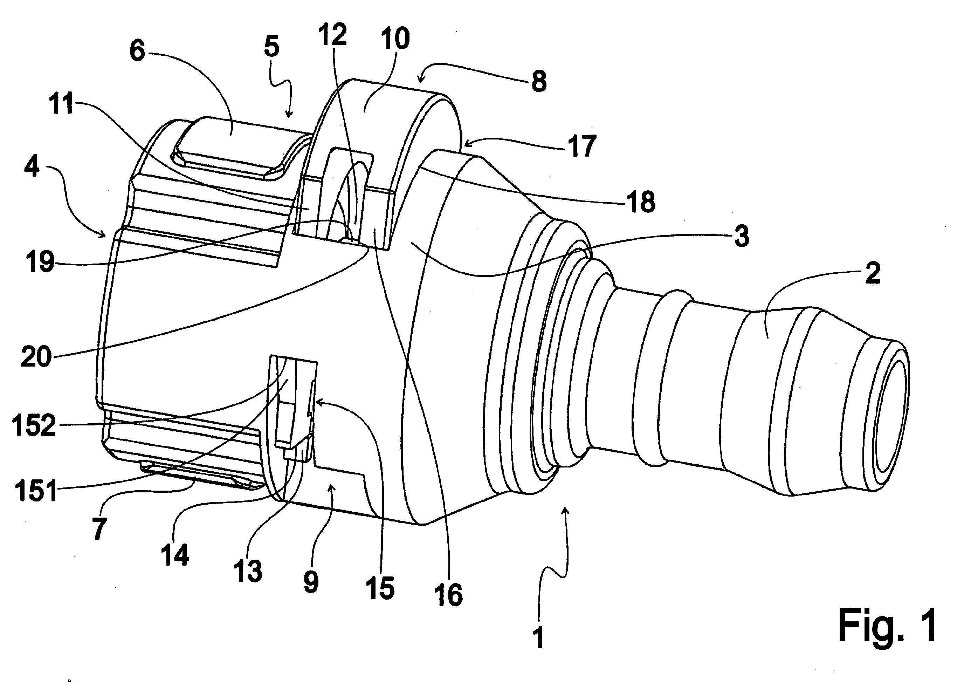

Fig. 1 zeigt in einer perspektivischen Ansicht ein Ausführungsbeispiel eines erfindungsgemäßen Kupplungsteiles 1. Das Kupplungsteil 1 gemäß Fig. 1 verfügt als Teil einer Fluidleitungskupplung über einen Anschlussabschnitt 2 zum Anschluss an eine in Fig. 1 nicht dargestellten Leitung eines Fluidleitungssystems. Der Anschlussabschnitt 2 steht mit einem gegenüber dem Querschnitt des Anschlussabschnittes 2 wesentlich größeren Aufnahmeabschnitt 3 in Verbindung, der eine im Wesentlichen zylinderförmige Gestalt aufweist und einen ebenfalls im Wesentlichen zylinderförmigen Aufnahmeraum umschließt. Der Aufnahmeraum ist an einer dem Anschlussabschnitt 2 gegenüberliegenden Einführseite 4 offen.

In dem der Einführseite 4 benachbarten Bereich des Aufnahmeabschnittes 3 weist das Kupplungsteil 1 ein Verriegelungselement 5 auf, das über zwei einander gegenüberliegende Druckplatten 6, 7 verfügt, die geringfügig über die Außenseite des Aufnahmeabschnittes 3 überstehen oder bündig mit ihr abschließen.

Weiterhin ist das Kupplungsteil 1 gemäß Fig. 1 auf der der Einführseite 4 abgewandten Seite des Verriegelungselementes 5 mit einem Kontrollelement 8 ausgestattet, das in dem Aufnahmeabschnitt 3 in einer darin ausgebildeten Kontrollelementaufnahme 9 in radialer Richtung verschiebbar gelagert ist. Das Kontrollelement 8 verfügt über einen Kuppelabschnitt 10, der bündig an die Außenkontur des Aufnahmeabschnittes 3 im Bereich der Kontrollelementaufnahme 9 angepasst ist und sich über einen gewissen Umfangsabschnitt über den Umfang des Aufnahmeabschnittes 3 erstreckt.

An der dem Verriegelungselement 5 zugewandten Seite des Kontrollelementes 8 ist in Umfangsrichtung seitlich jeweils ein Federarm 11, 12 angeformt, die sich in der in Fig. 1 dargestellten ersten Kontrollstellung bis zu Rastvorsprüngen 13 als Elemente einer Raststruktur erstrecken, die auf der dem Kuppelabschnitt 10 gegenüberliegenden Seite angeordnet sind und in die Kontrollelementaufnahme 9 hineinragen.

Die Kontrollelementaufnahme 9 ist im Bereich der Federarme 11, 12 so dimensioniert, dass die Federarme 11, 12 in axialer Richtung des Kupplungsteiles 1 in Richtung des Anschlussabschnittes 2 biegbar sind. Die Rastvorsprünge 13 erstrecken sich in axialer Richtung soweit in die Kontrollelementaufnahme 9 hinein, dass zwischen ihren in die Kontrollelementaufnahme 9 hineinragenden Enden und der gegenüberliegenden, dem Anschlussabschnitt 2 benachbarten Wand der Kontrollelementaufnahme 9 ausreichend Platz verbleibt, dass die Federarme 11, 12 bei einem Biegen in Richtung des Anschlussabschnittes 2 an den Rastvorsprüngen 13 vorbeitreten können.

In der in Fig. 1 dargestellten ersten Kontrollstellung liegen die Stirnseiten 14 der freien Enden der Federarme 11, 12 als Elemente einer Eingriffsstruktur an den Rastvorsprünge 13 an, so dass bei relaxierter Stellung der Federarme 11, 12 ein Einschieben des Kontrollelementes 8 in die Kontrollelementaufnahme 9 über die in Fig. 1 dargestellte erste Kontrollstellung hinaus blockiert ist.

Weiterhin lässt sich Fig. 1 entnehmen, dass an den Federarmen 11, 12 im Bereich der freien Enden jeweils eine komplementär zu den Rastvorsprüngen 13 ausgebildete Rastausnehmung 15 als weitere Elemente der Eingriffsstruktur vorhanden ist.

Zum Sichern des Kontrollteiles 8 gegen unbeabsichtigtes Herausziehen aus dem Kupplungsteil 1 sind an den Federarmen 11, 12 radial nach außen vorstehende Sicherungsnasen 151 angeformt, die in einer vormontierten Anordnung wie beispielsweise in der ersten Kontrollstellung eine an dem Aufnahmeabschnitt 3 ausgebildete Sicherungsfläche 152 hintergreifen.

An der den Federarmen 11, 12 in axialer Richtung gegenüberliegende Seite des Kuppelabschnittes 10 sind Führungsarme 16, 17 angeformt, die sich zwischen einer die Kontrollelementaufnahme 9 auf der Seite des Anschlussabschnittes 2 begrenzenden Führungswand 18 und weiteren, an Zwischenstegen 19 ausgebildeten Führungswänden 20 angeordnet sind.

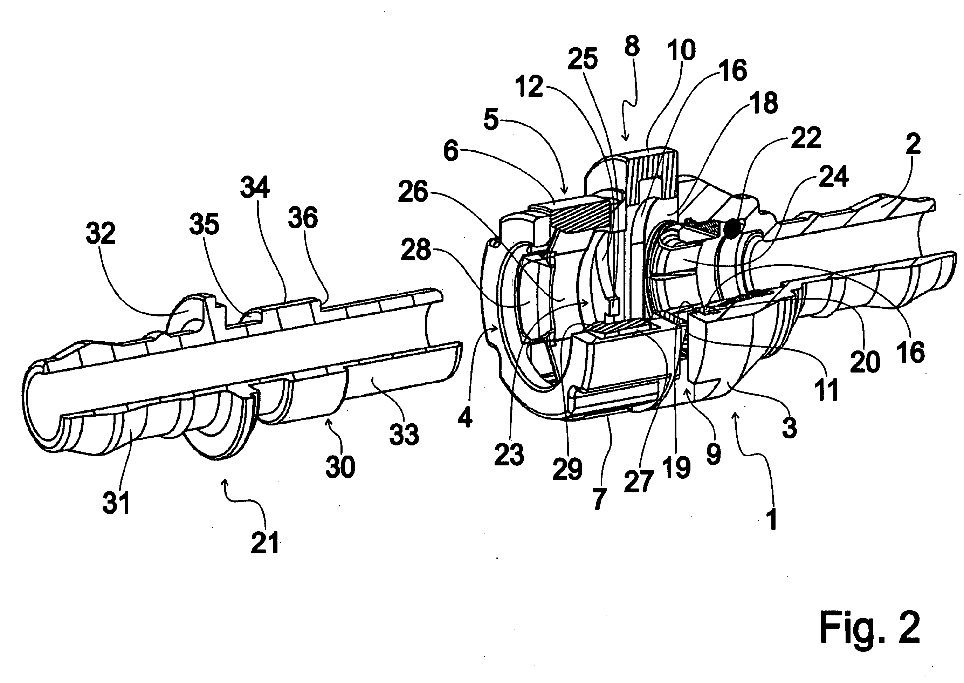

Fig. 2 zeigt in einer perspektivischen teilgeschnittenen Ansicht das beispielhafte Kupplungsteil 1 gemäß Fig. 1 mit dem Kontrollelement 8 in der ersten Kontrollstellung zusammen mit einem Einsteckteil 21 einer Fluidleitungskupplung, das in das Kupplungsteil 1 einzuführen ist, um eine Fluidleitungsverbindung herzustellen. Aus Fig. 2 ist ersichtlich, dass das Kupplungsteil 1 über eine Dichtungsanordnung 22 verfügt, die an dem dem Anschlussabschnitt 2 benachbarten Ende des Aufnahmeraumes 23 angeordnet und durch einen mit der Innenwand des Aufnahmeabschnittes 3 verriegelten Haltering 24 gehalten ist.

Weiterhin lässt sich der Darstellung gemäß Fig. 2 entnehmen, dass an den Federarmen 11, 12 jeweils ein Betätigungsvorsprung 25 ausgebildet ist, der in der ersten Kontrollstellung in den Aufnahmeraum 23 hineinragt.

Schließlich lässt Fig. 2 erkennen, dass das Verriegelungselement 5 über im Querschnitt verhältnismäßig dünne und daher biegsame Ringabschnitte 26, 27 verfügt, die sich umfänglich verlaufend zwischen den Druckplatten 6, 7 erstrecken. An den Ringabschnitten 26, 27 sind Verriegelungsnasen 28, 29 angeformt, die auf ihrer der Einführseite 4 zugewandten Seite in Richtung des Anschlussabschnittes 2 angeschrägt und auf ihrer der Einführseite 4 abgewandten Seite im Wesentlichen rechtwinklig radial ausgerichtet sind. Bei Ausüben einer Druckkraft auf die Druckplatten 6, 7 oder bei Ausüben einer radial nach außen gerichteten Kraft auf die Verriegelungsnasen 28, 29 federn die Verriegelungsnasen 28, 29 nach außen.

Das Einsteckteil 21 verfügt bei dem Ausführungsbeispiel gemäß Fig. 2 über einen im Wesentlichen zylinderförmigen Einsteckabschnitt 30 und einen Anschlussabschnitt 31 zum Verbinden mit einer in Fig. 2 nicht dargestellten weiteren Leitung des Fluidleitungssystems. Zwischen dem Einsteckabschnitt 30 und dem Anschlussabschnitt 31 ist eine radial überstehende Stirnplatte 32 ausgebildet, deren Durchmesser größer als der Innendurchmesser des Aufnahmeraumes 23 ist. Der Einsteckabschnitt 30 verfügt endseitig über einen Schaftabschnitt 33 mit einem Außendurchmesser, der etwas kleiner als der Innendurchmesser der Dichtungsanordnung 22 ist. In einem Abstand von der Stirnplatte 32 weist der Einsteckabschnitt 30 eine Ringschulter 34 auf, deren Außendurchmesser größer als der Außendurchmesser des Schaftabschnittes 33 und etwas kleiner als der Innendurchmesser des Aufnahmeraumes 23 ist. An der der Stirnplatte 32 zugewandten Seite ist die Ringschulter 34 mit einer rechtwinklig zu der Außenseite des Schaftabschnittes 33 sowie zu der Außenseite der Ringschulter 34 ausgerichteten Hinterrastfläche 35 und an der dem Schaftabschnitt 33 zugewandten Seite mit einer entsprechend radial ausgerichteten Anschlagfläche 36 ausgestattet.

Zum Herstellen einer ordnungsgemäßen Verbindung zwischen den mit dem Einsteckteil 21 beziehungsweise mit dem Kupplungsteil 1 verbundenen Leitungen des Fluidleitungssystems ist das Einsteckteil 21 mit seinem Einsteckabschnitt 30 in den Aufnahmeraum 23 des Kupplungsteiles 1 soweit einzuführen, dass die Verriegelungsnasen 28, 29 des Verriegelungselementes 5 die Ringschulter 34 hintergreifen und an der Hinterrastfläche 35 anliegen.

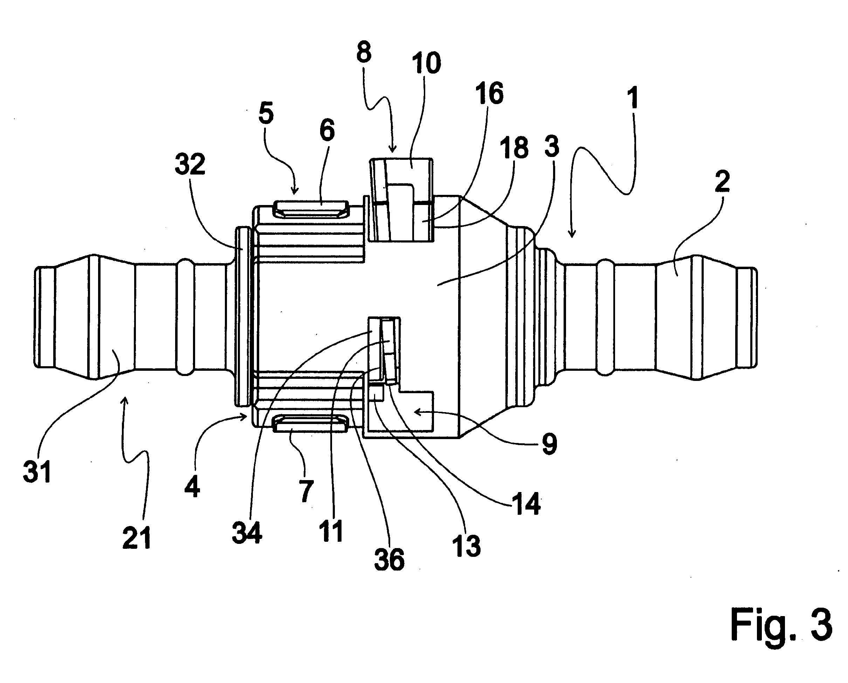

Fig. 3 zeigt in einer Seitenansicht das beispielhafte Kupplungsteil 1 mit dem eingeführten Einsteckteil 21 gemäß Fig. 2 in der ordnungsgemäß verriegelten Stellung. In dieser Stellung schlägt die Anschlagfläche 36 der Ringschulter 34 an die in der ersten Kontrollstellung in den Aufnahmeraum 23 hineinragenden Betätigungsvorsprünge 25 an und drückt die Federarme 11, 12 in axialer Richtung soweit in Einführrichtung des Einsteckteiles 21 in Richtung des Anschlussabschnittes 2 des Kupplungsteiles 1, dass der Eingriff der Stirnseiten 14 mit den Rastvorsprüngen 13 gelöst ist. In dieser Anordnung der Federarme 11, 12 ist das Kontrollelement 8 nunmehr durch Ausüben einer Druckkraft auf den Kuppelabschnitt 10 in die Kontrollelementaufnahme 9 in eine zweite Kontrolistellung überführbar.

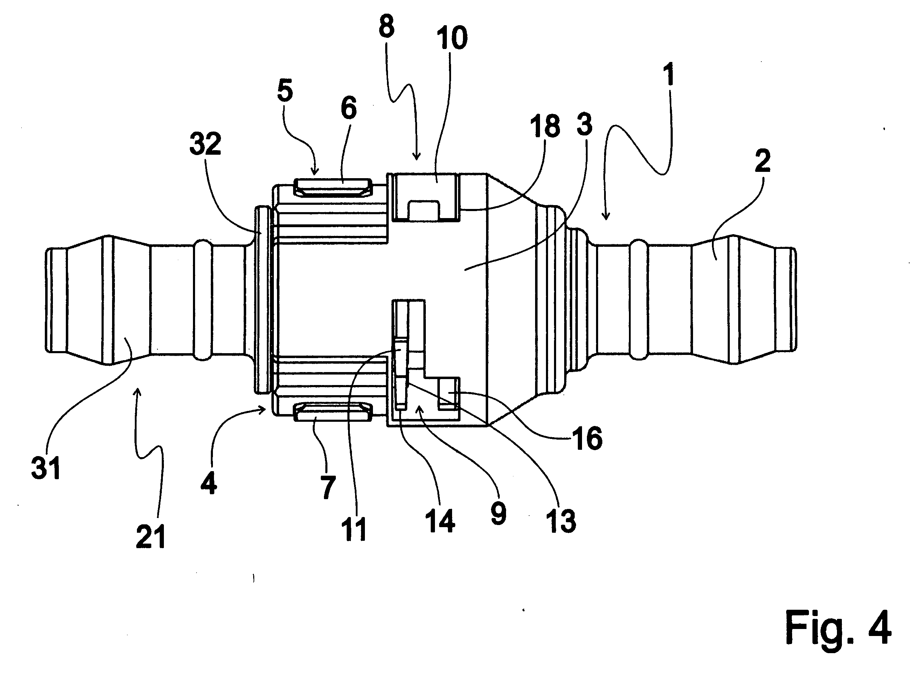

Fig. 4 zeigt das Kupplungsteil 1 und das Einsteckteil 21 in der Anordnung gemäß Fig. 3 mit dem Kontrollelement 8 in der zweiten Kontrolistellung, in der der Kuppelabschnitt 10 bündig mit der Außenkontur des Aufnahmeabschnittes 3 abschließt. In der zweiten Kontrollstellung umschließen die Betätigungsvorsprünge 25 den Schaftabschnitt 33 auf der dem Kuppelabschnitt 10 gegenüberliegenden Seite, und die Rastausnehmungen 15 sind mit den Rastvorsprüngen 13 in Eingriff. Dadurch ist das Kontrollelement 8 in der zweiten Kontrollstellung verriegelt, wobei jedoch unabhängig von der Stellung des Kontrollteiles 8 durch Ausüben einer Druckkraft auf die Druckplatten 6, 7 der Eingriff zwischen den Verriegelungsnasen 28, 29 und der Ringschulter 34 gelöst werden kann, um das Einsteckteil 21 wieder aus dem Kupplungsteil 1 zu entfernen, ohne dass das Kontrollelement 8 insbesondere bei verengten Platzverhältnissen sehr aufwändig oder unter Umständen sogar so gut wie unmöglich durch Bewegen der Federarme 11, 12 in Richtung des Anschlussabschnittes 2 zum Lösen des Eingriffes zwischen den Rastausnehmungen 15 und den Rastvorsprüngen 13 von der zweiten Kontrollstellung wieder in die erste Kontrollstellung überführt werden muss.

Dem Benutzer bleibt es jedoch ungenommen, das Kontrollelement 8 bei einem Entfernen des Einsteckteiles 21 aus dem Kupplungsteil 1 das Kontrollelement 8 durch Lösen des Eingriffs zwischen den Rastausnehmungen 15 und den Rastvorsprüngen 13 über Biegen der Federarme 11, 12 in axialer Richtung zu dem Anschlussabschnitt 2 wieder in die erste Kontrollstellung zu überführen, um eine erneute Verriegelungskontrolle zu haben, falls dies möglich und zweckmäßig ist.

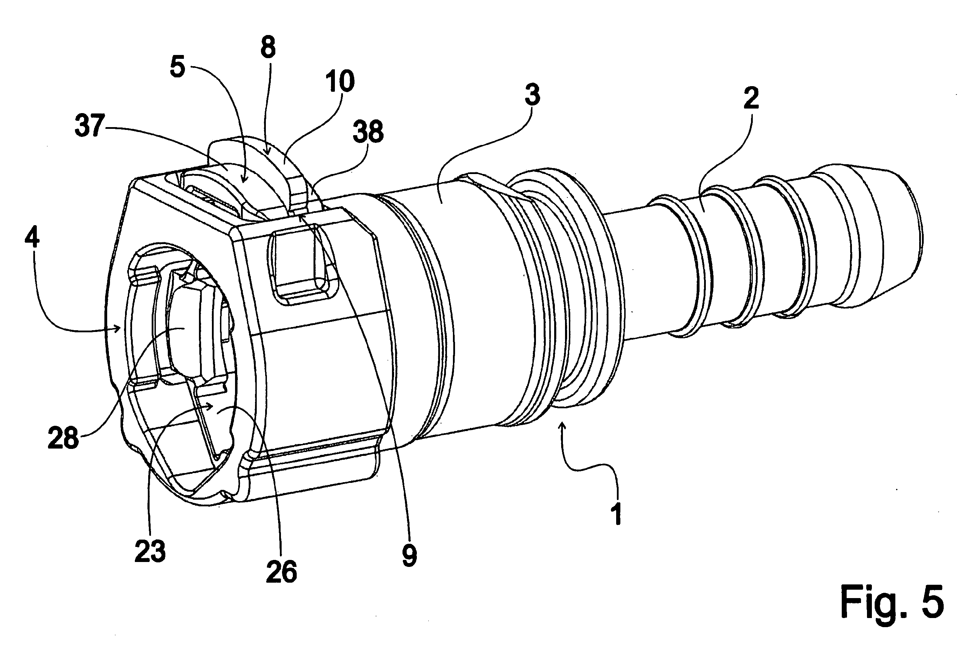

Fig. 5 zeigt in einer perspektivischen Ansicht ein weiteres Ausführungsbeispiel eines erfindungsgemäßen Kupplungsteiles 1, wobei sich bei dem Ausführungsbeispiel gemäß Fig. 1 bis Fig. 4 und dem Ausführungsbeispiel gemäß Fig. 5 entsprechende Elemente mit den gleichen Bezugszeichen versehen und im weiteren nicht näher erläutert sind. Bei dem Ausführungsbeispiel gemäß Fig. 5 ist das Verriegelungselement 5 mit einem der Einführseite 4 zugewandten ersten Druckplattenabschnitt 37 und einem dem Anschlussabschnitt 2 zugewandten zweiten Druckplattenabschnitt 38 ausgebildet, die beidseitig einer in dem Verriegelungselement 5 ausgebildeten Kontrollteilaufnahme 9 angeordnet sind. Der Kuppelabschnitt 10 des Kontrollelementes 8, das bei dem Ausführungsbeispiel gemäß Fig. 5 lediglich mit zwei, in der Darstellung gemäß Fig. 5 nicht sichtbaren Federarmen 11, 12 ausgebildet ist, ist zwischen den Druckplattenabschnitten 37, 38 angeordnet und steht in der in Fig. 5 dargestellten ersten Kontrollstellung des Kontrollelementes 8 über die Druckplattenabschnitte 37, 38 vor.

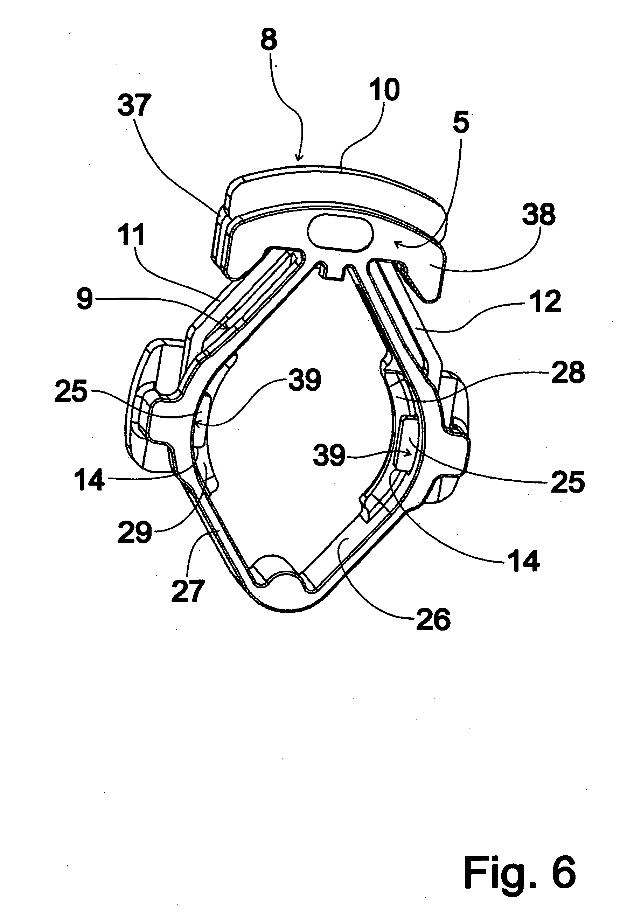

Fig. 6 zeigt in einer perspektivischen Ansicht das Verriegelungselement 5 mit dem sich in der ersten Kontrollstellung befindlichen Kontrollelement 8 mit Blick auf die dem Anschlussabschnitt 2 zugewandte Seite. Aus Fig. 6 ist ersichtlich, dass jeder in der Kontrollelementaufnahme 9 in axialer Richtung spielfrei geführte Federarm 11, 12 als Bestätigungsstruktur über einen Betätigungsvorsprung 25 verfügt, an dem die dem Kuppelabschnitt 10 abgewandte Stirnseite 14 als Eingriffsstruktur an der Wand einer in dem jeweiligen Federarm 11, 12 ausgebildeten Betätigungsvorsprungsaufnahme 39 anliegt und das Kontrollelement 8 in der ersten Kontrollstellung gegen ein vollständiges Einschieben in die zweite Kontrollstellung blockiert, falls die Verriegelungsnasen 28, 29 nicht die Ringschulter 34 eines in Fig. 6 nicht dargestellten Einsteckteiles 21 hintergriffen haben.

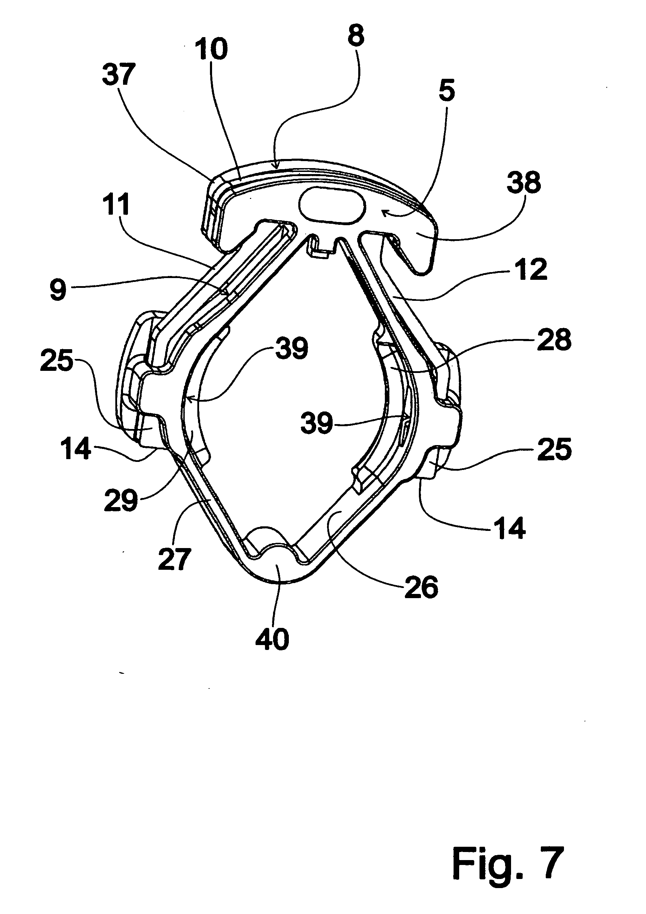

Fig. 7 zeigt das Verriegelungselement 5 und das Kontrollelement 8 in einer Darstellung gemäß Fig. 6 in der zweiten Kontrollstellung, in der nach dem Hintergreifen der Ringschulter 34 eines Einsteckteiles 21 die Ringschulter 34 die Betätigungsvorsprung 25 so weit radial nach außen gedrückt hat, dass der Eingriff zwischen den Stirnseiten 14 der Verriegelungsvorsprünge 25 und der im Bereich der Stirnseiten 14 abgeschrägten Wand der Betätigungsvorsprungsaufnahme 39 aufgehoben ist und in das Kontrollelement 8 bei Ausüben einer Druckkraft auf den Kuppelabschnitt 10 vollständig in die Kontrollelementaufnahme 9 eingeschoben werden kann. Durch den in der zweiten Kontrollstellung nunmehr bündigen Abschluss der Außenseite des Kuppelabschnittes 10 und der Außenseiten der Druckplattenabschnitte 37, 38 ist eine zuverlässige Anzeige für eine ordnungsgemäßen Eingriff zwischen dem Verriegelungselement 5 und dem Einsteckteil 21 geschaffen.

In der zweiten Kontrollstellung des Kontrollteiles 8 lässt sich der Eingriff zwischen dem Verriegelungselement 5 und dem Einsteckteil 21 dadurch aufheben, dass auf die Druckplattenabschnitte 37, 38 eine Druckkraft ausgeübt wird, die aufgrund des Abstützens eines zwischen den von den Druckplattenabschnitten 37, 38 abgewandten Enden der Ringabschnitte 26, 27 ausgebildeten Verbindungsabschnittes 40 an dem Aufnahmeabschnittes 3 ein Bewegen der Verriegelungsnasen 28, 29 radial nach außen bewirkt.

## Patentansprüche

1. Kupplungsteil für eine Fluidleitungskupplung mit einem in einem Aufnahmeabschnitt (3) gehaltenen Verriegelungselement (5) zum Verriegeln eines in einen Aufnahmeraum (23) des Aufnahmeabschnittes (3) einzuführenden, mit einer Ringschulter (34) ausgebildeten Einsteckteiles (21), **dadurch gekennzeichnet, dass** ein separates, in radialer Richtung in einer Kontrollteilaufnahme (9) verschiebbar gelagertes Kontrollelement (8) vorhanden ist, wobei das Kontrollelement (8) wenigstens einen seitlichen, in axialer Richtung federnd ausgebildeten Federarm (11, 12) aufweist, an dem an einem freien Ende eine Eingriffsstruktur (14, 15) und eine Betätigungsstruktur (25) ausgebildet ist, dass in der Kontrollteilaufnahme (9) eine mit der an dem oder jedem Federarm (11, 12) ausgebildeten Eingriffsstruktur (14, 15) dergestalt zusammenwirkende Raststruktur (13) ausgebildet ist, dass bei einem Kontakt der Ringschulter (34) mit der an dem oder jedem Federarm (11, 12) ausgebildeten Betätigungsstruktur (25) das Kontrollelement (8) von einer ansonsten blockierten ersten Kontrollstellung in eine zweite Kontrollstellung überführbar ist, in der das Kontrollelement (8) außer Eingriff mit dem eingeführten Einsteckteil (21) ist.

2. Kupplungsteil nach Anspruch 1, **dadurch gekennzeichnet, dass** die Kontrollteilaufnahme (9) in dem Aufnahmeabschnitt (3) ausgebildet ist

3. Kupplungsteil nach Anspruch 2, **dadurch gekennzeichnet, dass** die Raststruktur jeweils einen in die Kontrollteilaufnahme (9) hineinragenden, einem Federarm (11, 12) zugeordneten Rastvorsprung (13) aufweist.

4. Kupplungsteil nach Anspruch 3, **dadurch gekennzeichnet, dass** die Eingriffsstruktur eine in der ersten Kontrollstellung an dem Rastvorsprung (13) anliegende Stirnseite (14) aufweist, die endseitig des oder jedes Federarmes (11, 12) ausgebildet ist.

5. Kupplungsteil nach Anspruch 3 oder Anspruch 4, **dadurch gekennzeichnet, dass** die Eingriffsstruktur über eine Rastausnehmung (15) verfügt, in die in der zweiten Kontrollstellung der dieser Rastausnehmung (15) zugeordnete Rastvorsprung (13) eingreift.

6. Kupplungsteil nach Anspruch 1, **dadurch gekennzeichnet, dass** die Kontrollelementaufnahme (9) in dem Verriegelungselement (5) ausgebildet ist.

7. Kupplungsteil nach Anspruch 6, **dadurch gekennzeichnet, dass** die Raststruktur eine Betätigungsvorsprungsaufnahme (39) aufweist und die Eingriffsstruktur über eine Stirnseite (14) verfügt, die endseitig eines die Bestätigungsstruktur bildenden, in der erste Kontrollstellung in den Aufnahmeraum (23) hineinragenden Betätigungsvorsprunges (25) ausgebildet ist, wobei jeder Betätigungsvorsprung (25) in der ersten Kontrollstellung in der Betätigungsvorsprungsaufnahme (39) angeordnet ist.

8. Kupplungsteil nach einem der Ansprüche 1 bis 7, **dadurch gekennzeichnet, dass** die Betätigungsstruktur für jeden Federarm (11, 12) einen in der ersten Kontrollstellung des Kontrollelementes (8) in den Aufnahmeraum (23) hineinragenden Betätigungsvorsprung (25) aufweist, der in der zweiten Kontrollstellung außerhalb des Aufnahmeraumes (23) angeordnet ist.

9. Kupplungsteil nach einem der Ansprüche 1 bis 8, **dadurch gekennzeichnet, dass** zwei Federarme (11, 12) vorhanden sind, die über einen Kuppelabschnitt (10) miteinander verbunden sind.

10. Kupplungsteil nach Anspruch 9, **dadurch gekennzeichnet, dass** der Kuppelabschnitt (10) in der ersten Kontrollstellung über den Aufnahmeabschnitt (3) vorsteht und in der zweiten Kontrollstellung bündig mit der Außenseite des Aufnahmeabschnittes (3) abschließt.

11. Kupplungsteil nach einem der Ansprüche 1 bis 10, **dadurch gekennzeichnet, dass** das Kontrollelement (8) wenigstens einen Führungsarm (17, 18) aufweist, der zwischen zwei in der Kontrolletementaufnahme (9) ausgebildeten Führungswänden (18, 20) angeordnet ist.

## Claims

1. Part for a coupling for fluid-carrying lines, having a locking member (5), which is held in a receiving portion (3), for locking an insertable part (21) which is formed to have an annular shoulder (34) and which is to be introduced into a receiving space (23) in the receiving portion (3), **characterised in that** there is a separate checking member (8) which is displaceably mounted in the radial direction in a receptacle (9) for the checking member, the checking member (8) having at least one lateral resilient arm (11, 12) which is designed to be resilient in the axial direction and on which there is formed, at one, free, end, an engaging structure (14, 15) and an actuating structure (25), **in that** there is formed in the receptacle (9) for the checking member a structure (13) for latching which co-operates with the engaging structure (14, 15) formed on the or each resilient arm (11, 12) in such a way that, when the annular shoulder (34) is in contact with the actuating structure (25) formed on the or each resilient arm (11, 12), the checking member (8) can be transferred from a first checking position in which it is otherwise locked to a second checking position in which the checking member (8) is out of engagement with the insertable part (21) which has been introduced.

2. Part according to claim 1, **characterised in that** the receptacle (9) for the checking member is formed in the receiving portion (3).

3. Part according to claim 2, **characterised in that** the or each structure for latching has a latching projection (13) which projects into the receptacle (9) for the checking member and which is associated with a resilient arm (11, 12).

4. Part according to claim 3, **characterised in that** the engaging structure has an end-face (14) which rests on the latching projection (13) in the first checking position and which is formed at the end of the or each resilient arm (11, 12).

5. Part according to claim 3 or claim 4, **characterised in that** the engaging structure has a latching recess (15) in which the latching projection (13) which is associated with the said latching recess (15) engages in the second checking position.

6. Part according to claim 1, **characterised in that** the receptacle (9) for the checking member is formed in the locking member (5)

7. Part according to claim 6, **characterised in that** the latching structure has a receptacle (39) for an actuating projection and the engaging structure has an end-face (14) which is formed at the end of an actuating projection (25) which forms the actuating structure and which projects into the receiving space (23) in the first checking position, each actuating projection (25) being arranged in the receptacle (39) for an actuating projection in the first checking position.

8. Part according to one of claims 1 to 7, **characterised in that** the actuating structure has, for each resilient arm (11, 12), an actuating projection (25) which projects into the receiving space (23) when the checking member (8) is in the first checking position and which is arranged outside the receiving space (23) in the second checking position.

9. Part according to one of claims 1 to 8, **characterised in that** there are two resilient arms (11, 12) which are connected together by a coupling portion (10).

10. Part according to claim 9, **characterised in that** the coupling portion (10) projects above the receiving portion (3) in the first checking position and lies flush with the outside of the receiving portion (3) in the second checking position.

11. Part according to one of claims 1 to 10, **characterised in that** the checking member (8) has at least one guiding arm (17, 18) which is arranged between two guiding walls (18, 20) formed in the receptacle (9) for the checking member.

## Revendications

1. Elément de raccord pour un raccord destiné à un système de conduites de fluide, comprenant un organe de verrouillage (5) maintenu dans une portion d'emmanchement femelle (3) pour assurer le verrouillage en position d'un élément embrochable mâle (21), muni d'un protubérance annulaire (34), destinée à être emmanchée dans le gabarit de réception (23) de la portion d'emmanchement femelle (3), **caractérisé en ce qu'**il est prévu un témoin de contrôle d'accouplement (8) séparé susceptible d'être déplacé, disposé dans le plan radial, dans un logement d'insertion du témoin de contrôle (9), le témoin de contrôle d'accouplement (8) comportant en l'occurrence au moins une patte élastique (11, 12) à même d'exercer un effet de réaction élastique dans le sens axial, qui comporte, au niveau de son extrémité libre, une structure de mise en prise d'encastrement (14, 15) et une structure d'actionnement (25), **en ce qu'**il est prévu, dans le logement d'insertion du témoin de contrôle (9), une structure d'accrochage (13) opérant en combinaison avec la structure de mise en prise d'encastrement (14, 15) dont est munie la ou chaque patte élastique (11, 12), dans des conditions telles que, lorsque la protubérance annulaire (34) vient en contact avec la structure de mise en prise d'encastrement (14, 15) dont est munie la ou chaque patte élastique (11, 12), le témoin de contrôle d'accouplement (8) peut être amené, d'une première position de contrôle correspondant à un état de blocage en position, dans une deuxième position de contrôle dans laquelle le témoin de contrôle d'accouplement (8) n'est plus en prise d'engagement avec l'élément embrochable mâle (21) en position d'emmanchement.

2. Elément de raccord selon la revendication 1, **caractérisé en ce que** le logement d'insertion du témoin de contrôle d'accouplement (9) est réalisé dans la portion formant logement (3).

3. Elément de raccord selon la revendication 2, **caractérisé en ce que** la structure d'accrochage comporte une protubérance d'accrochage (13) faisant saillie à l'intérieur du logement d'insertion du témoin de contrôle d'accouplement (9) respectivement associée à une patte élastique (11, 12).

4. Elément de raccord selon la revendication 3, **caractérisé en ce que** la structure de mise en prise d'encastrement comporte une face antérieure (14), en contact d'application contre la protubérance d'accrochage (13) dans la première position de contrôle, qui est ménagée à l'extrémité de la ou de chaque patte élastique (11, 12).

5. Elément de raccord selon la revendication 3 ou la revendication 4, **caractérisé en ce que** la structure de mise en prise d'encastrement comporte un évidement d'accrochage (15), dans lequel la protubérance d'accrochage (13) correspondant à cet évidement d'accrochage (15) vient s'insérer en prise d'engagement dans la deuxième position de contrôle.

6. Elément de raccord selon la revendication 1, **caractérisé en ce que** le logement d'insertion du témoin d'accouplement (9) fait partie intégrante de l'organe de verrouillage (5).

7. Elément de raccord selon la revendication 6, **caractérisé en ce que** la structure d'accrochage comporte un logement d'insertion de la protubérance d'actionnement (39) et la structure de mise en prise d'engagement comporte une face antérieure (14) qui est ménagée au niveau de l'extrémité d'une protubérance d'actionnement (25) constituant la structure d'actionnement, qui, dans la première position de contrôle, fait saillie à l'intérieur du gabarit de réception (23), chaque protubérance d'actionnement (25) se trouvant en l'occurrence disposée dans le logement d'insertion de la protubérance d'actionnement (39) dans la première position de contrôle.

8. Elément de raccord selon l'une des revendications 1 à 7, **caractérisé en ce que** la structure d'actionnement comporte, pour chaque patte élastique (11, 12), une protubérance d'actionnement faisant saillie, dans la première position de contrôle du témoin de contrôle d'accouplement (8), dans le gabarit de réception (23), qui, dans la deuxième position de contrôle, est située à l'extérieur du gabarit de réception (23).

9. Elément de raccord selon l'une des revendications 1 à 8, **caractérisé en ce qu'**il est prévu deux pattes élastiques (11, 12) qui sont raccordées ensemble par l'intermédiaire d'un pontet d'accouplement (10).

10. Elément de raccord selon la revendication 9, **caractérisé en ce que** le pontet d'accouplement (10) fait saillie au-dessus de la portion d'emmanchement femelle (3) dans la première position de contrôle et vient en affleurement du côté extérieur de la portion d'emmanchement femelle (3) dans la deuxième position de contrôle.

11. Elément de raccord selon l'une des revendications 1 à 10, **caractérisé en ce que** le témoin de contrôle d'accouplement (8) comporte au moins une patte de guidage (17, 18) qui est disposée entre deux parois de guidage (18, 20) ménagées dans le logement d'insertion du témoin de contrôle de l'accouplement (9).
